# EUROPEAN PATENT APPLICATION

(11) **EP 4 808 090 A1**
(43) Date of publication of application: **16.09.2026**
(21) Application number: 25850443.0
(22) Date of filing: 28.07.2025
(51) Int. Cl.: H04L 67/2871, G08G 1/16, H04L 67/12

(54) **COMMUNICATION-MIDDLEWARE-IMPLEMENTED ARCHITECTURE SYSTEM AND CONTROL METHOD APPLICABLE TO AUTOMATIC PARKING PLANNING AND CONTROL ALGORITHM**

(30) Priority: 07.08.2024 CN 202411079404
(71) Applicant: Chery Automobile Co., Ltd., Wuhu, Anhui 241006 (CN); Shanghai Sicar Vehicle Research & Development Co., Ltd., Shanghai 200126 (CN)
(72) Inventor: WANG, Nianhui, Wuhu, Anhui 241006 (CN); LU, Yuejie, Wuhu, Anhui 241006 (CN); ZHANG, Xiaohong, Wuhu, Anhui 241006 (CN)
(74) Representative: Adamson Jones
(86) International application number: PCT/CN2025/110964
(87) International publication number: WO 2026/032065

(57) **Abstract**

A communication-middleware-implemented architecture system and control method applicable to an automatic parking planning and control algorithm. By using an SOA concept to perform service-oriented division on data conversion logic, and by optimizing the real-time performance of software by means of EventLoop and dynamic thread pool technology, a high-performance general-purpose middleware solution compatible with a plurality of vendor perception solutions is implemented to ensure the decoupling of an automatic parking algorithm from upstream perception data, such that a vendor can freely access, in the form of a standard part, middleware designed in the present application, thereby greatly shortening a vehicle model adaptation period and reducing the mass production costs for automatic parking.

## Description

The present disclosure claims priority to Chinese Patent Application No. 202411079404.4, filed August 7, 2024, and entitled "COMMUNICATION-MIDDLEWARE-IMPLEMENTATION ARCHITECTURE SYSTEM AND CONTROL METHOD APPLICABLE TO AUTOMATIC PARKING PLANNING AND CONTROL ALGORITHM," the entire content of which is incorporated herein by reference.

### TECHNICAL FIELD

The present disclosure pertains to the field of automatic parking communication middleware software, specifically relating to a communication-middleware-implementation architecture system and control method applicbale to automatic parking planning and control algorithms.

### BACKGROUND

Autonomous driving technology is increasingly becoming the focus of research and development in the automotive industry. The autonomous parking system is one of the important application areas of autonomous driving technology. It enables drivers to easily let the vehicle complete the parking process autonomously, improving driving comfort and safety.

With the rapid development of current environmental perception technology, the accuracy and reliability of automatic parking systems have been rapidly improved. Moreover, in terms of usage, various parking methods such as oblique parking, side parking, and circular roadway parking have rapidly evolved from traditional parallel parking and perpendicular parking. This has led to a rapid increase in the commercialization of automatic parking systems, with more and more car brands incorporating automatic parking technology as a standard or optional feature in their high-end models. With the rapid commercialization of automatic parking technology, an increasing number of perception solution providers are joining the competition for automatic parking system products.

However, there are significant differences in the perception capabilities and perception data provided by different suppliers' perception solutions. As original equipment manufacturers seek stable and continuously iterated parking planning and control algorithms, it is necessary to minimize the coupling with suppliers' data interfaces to the greatest extent possible, so that their algorithms can evolve and iterate independently. Therefore, compatibility becomes an important issue to consider in the field of autonomous parking.

### SUMMARY

The present disclosure can overcome the problem of data interface coupling with suppliers caused by the plurality of service-oriented layers in the existing SOA architecture, which in turn leads to system burden and low real-time performance of software systems. It provides a communication-middleware-implementation architecture system and control method applicable to automatic parking planning and control algorithms.

To achieve the above objectives, the present disclosure adopts the following technical solutions.

An communication-middleware-implementation architecture system applicable to automatic parking planning and control algorithms, including:
an integrated perception unit, configured to receive vehicle sensor data; and acquire surrounding environment information of a vehicle by comprehensively perceiving, based on the vehicle sensor data, surrounding environment of the vehicle; and
an autonomous driving domain controller, connected to the integrated perception unit, and configured to coordinate and manage an autonomous driving behavior of the vehicle based on the surrounding environment information of the vehicle;
wherein the autonomous driving domain controller includes:
   a supplier module, configured to provide the surrounding environment information of the vehicle to an upper-layer data conversion service layer module; wherein the supplier module is internally provided with supplier middleware and a first shared memory;
   the data conversion service layer module, configured to acquire converted data information by performing data conversion and data unified processing on received surrounding environment information of the vehicle; and provide the converted data information to the upper-layer automatic parking algorithm service layer module;
   wherein the data conversion service layer module includes service-oriented architecture (SOA) middleware and a second shared memory, wherein the SOA middleware encapsulates a data distribution service (DDS) and scalable SOMEIP service-oriented communication middleware running on an Internet protocol, and the SOA middleware is directly integrated into vendor middleware; and
   an automatic parking algorithm service layer module, configured to receive data information from the data conversion service layer module, and perform path planning and control for an automatic parking service based on the data information.

A communication-middleware-implementation control method applicable to automatic parking planning and control algorithms, performed by a control device, is as follows:
controlling an integrated perception unit to receive and extract vehicle environment information acquired by a sensor;
controlling transmission of acquired vehicle surrounding information to a supplier module in an autonomous driving domain controller through supplier middleware;
controlling a second shared memory of a data conversion service layer module to read path planning data information from a first shared memory in the supplier module;
controlling placement of an event into an event loop of a managed thread upon arrival of read event information, wherein the managed thread is configured to call an event handling function to process each received event individually;
controlling transmission of processed path planning data information to SOA middleware, wherein the processed path planning data information is transmitted to an automatic parking algorithm service layer module through the SOA middleware;
controlling an automatic parking algorithm layer module to generate control information and return control data information to the second shared memory of the data conversion service layer module, wherein the second shared memory is configured to transmit a control signal that needs to be executed by a vehicle to the first shared memory of the supplier module, so as to control the vehicle to complete parking.

A communication protocol stack of the SOA middleware is secondarily encapsulated into a function interface. Through a macro definition, underlying DDS and SOMEIP implementations are freely switchable at compile time.

In the data conversion service layer module of the autonomous driving domain controller, data needs to be processed by each SOA service is stored in a data field of an event, added to a task queue of a thread pool through a thread manager, and then handed over to the handling thread for event handling.

The autonomous driving domain controller includes a clock management module, and the data conversion service layer module periodically initiates a request-response data communication mode.

Including a chassis domain controller, which is configured for electronic power steering based on the autonomous driving behavior of the autonomous driving domain controller; and
an electronic stability program controller, configured to monitor a driving status of vehicle; and
using a request-response mode to handle a handshake procedure between the autonomous driving domain controller and the chassis domain controller's electronic power steering, and a handshake procedure between the autonomous driving domain controller and the electronic stability program controller, and transmittting generated data to the SOA middleware.

The present disclosure achieves the following beneficial effects.

The present disclosure proposes a communication-middleware-implementation architecture system and control method applicable to automatic parking planning and control algorithms, including the integrated perception unit and the autonomous driving domain controller. The autonomous driving domain controller includes the supplier module, the data conversion service layer module, and the automatic parking algorithm service layer module. The data conversion service layer module is set with SOA middleware and the shared memory. The service-oriented communication middleware of DDS and SOMEIP is encapsulated within the SOA middleware, and the SOA middleware is directly integrated into the supplier middleware module. This achieves decoupling between the automatic parking planning and control algorithm and the supplier perception data interface. Through service-oriented design, the perception data conversion logic can be imported into the middleware platform in the form of a plug-in, minimizing the software modification and deployment workload caused by supplier perception data adaptation work, and shortening the development cycle.

Furthermore, by optimizing the real-time performance of software through event loop and dynamic thread pool technology, a high-performance universal middleware solution compatible with a plurality of vendor perception solutions is implemented to ensure the decoupling of automatic parking algorithms from upstream perception data. This enables vendors to freely integrate into the middleware designed in the present disclosure in a similar standard component format, significantly shortening the vehicle model adaptation cycle and reducing the mass production cost of automatic parking.

### BRIEF DESCRIPTION OF DRAWINGS

FIG. 1 is a schematic diagram of a general design of a system architecture according to the present disclosure.
FIG. 2 is a schematic diagram of a detailed design of the system architecture according to the present disclosure.
FIG. 3 is a schematic diagram of a design of SOA middleware architecture.

### DETAILED DESCRIPTION

To further understand the content of the present disclosure, the following provides a detailed description of the present disclosure in conjunction with the accompanying drawings and specific embodiments. It should be understood that the embodiments are merely used to explain the present disclosure and are not intended to be limiting.

The present disclosure designs a data conversion gateway based on the service-oriented architecture middleware (SOA) service-oriented concept. The key design goal of this data gateway is to process and convert the perception output data from suppliers with their respective characteristics into a common perception data type that is accepted by the automatic parking algorithm. The system architecture design is as follows.

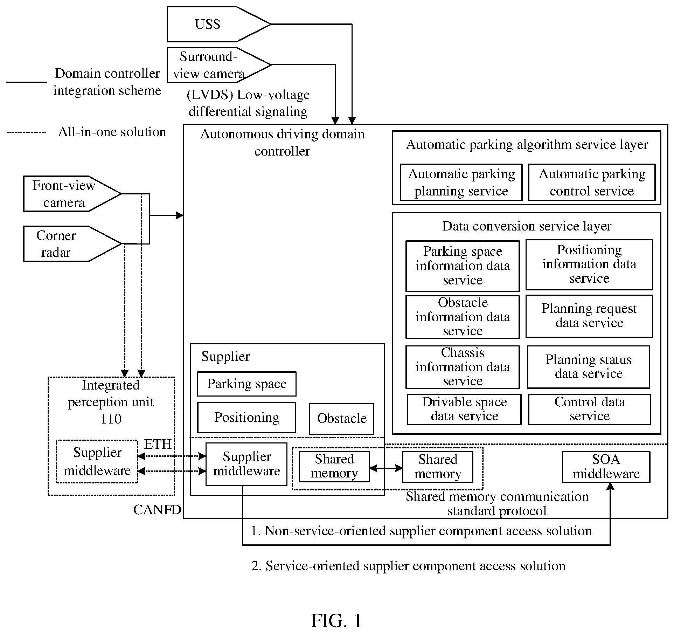

As illustrated in FIG. 1, a communication-middleware-implementation architecture system applicable to automatic parking planning and control algorithms, and the method primarily operates within an autonomous driving domain controller. This method is applicable to both integrated perception unit 110 and domain control aggregation hardware architectures, maximizing compatibility with perception solutions currently available from market suppliers. The architecture system according to the embodiments of the present disclosure is formed by integrating the integrated perception unit 110 and domain control aggregation (autonomous driving controller) hardware architectures. The integrated perception unit 110 internally includes supplier middleware, while the autonomous driving domain controller is internally provided with a supplier module, a data conversion service layer module, and an automatic parking algorithm service layer module. The integrated perception unit 110 is connected to the autonomous driving domain controller, and externally, the integrated perception unit 110 is connected to the corner radar system and front-view camera. The autonomous driving domain controller is externally linked to the USS and surround-view camera.

Illustratively, the integrated perception unit and the autonomous driving domain controller are the two core modules of the auto drive system. The integrated perception unit perceives the surrounding environment of the vehicle (such as real-time perception or periodic perception) by receiving data from various vehicle sensors (such as cameras, radars, lidars, etc.). The sensor acquires vehicle sensor data, wherein the vehicle sensor data includes at least one of vehicle speed (e.g., acquired by a speed sensor), vehicle captured images (e.g., acquired by a camera), vehicle acceleration (e.g., acquired by an acceleration sensor), vehicle temperature (e.g., acquired by a temperature sensor), etc. The integrated perception unit can acquire surrounding environment information of the vehicle through the fusion and organization of vehicle sensor data. The surrounding environment information of the vehicle includes at least one of surrounding obstacle, pedestrian, other vehicle, traffic identifier, or road condition, which is not limited here.

Illustratively, the autonomous driving domain controller, which closely cooperates with the integrated perception unit, is responsible for coordinating and managing the autonomous driving behavior of the vehicle based on the surrounding environment information. Based on the received surrounding environment information, the autonomous driving domain controller formulates corresponding driving decisions, such as acceleration, braking, steering, etc., and controls the vehicle's movement. The domain controller not only relies on perception data, but also combines on-board sensors, power system status, and high-precision map information to make real-time decision optimization.

The autonomous driving domain controller includes the supplier module, the data conversion service layer module, the data conversion service layer module, and the automatic parking algorithm service layer module.

The supplier module provides the surrounding environment information of the current vehicle to the upper-layer data conversion service layer module. Illustratively, the surrounding environment information of the vehicle includes at least one of position information, parking space information for parking, or obstacle information on the road.

The supplier module internally includes supplier middleware and a first shared memory.

Illustratively, the supplier module is the part of the auto drive system responsible for interacting with external suppliers; and the supplier middleware is a software layer responsible for transmitting and coordinating data between different modules within the system, serving as a communication bridge between supplier devices and other modules of the auto drive system, ensuring efficient and secure data transmission. The supplier middleware can support a plurality of protocols and interfaces, facilitating integration with hardware devices or software systems from different suppliers.

The first shared memory is a memory area for a plurality of modules to share data. In the auto drive system, the first shared memory can be used to store key information such as real-time sensor data and environment information, ensuring that different modules can access the data in real-time, thereby enabling rapid response and decision-making.

The data conversion service layer module is configured to perform data conversion and data unified processing on the received surrounding environment information of the vehicle to acquire converted data information, and provide the converted data information to the upper-layer automatic parking algorithm service layer module.

Illustratively, the data conversion service layer module is primarily responsible for the interaction of the surrounding environment information of the vehicle with the supplier module. The supplier module acquires data about the surrounding environment of the vehicle through various types of sensors. In order to quantify the surrounding environment information of the vehicle that may have format differences, the data conversion service layer module processes the surrounding environment information of the vehicle.

Optionally, data acquired by different sensors can be converted into a unified format or standard, so that the upper-layer module can effectively process and use it. Illustratively, the data acquired by sensors will undergo parsing, decoding, and formatting to ensure compatibility and consistency among different modules.

Optionally, considering the potential differences in accuracy, timestamps, or coordinate systems among sensors from different suppliers, it is necessary to perform unified processing to ensure that the final data meets system requirements and possesses high accuracy and timeliness.

Illustratively, the unified processing includes at least one of various processing methods such as time synchronization processing (e.g., using a unified clock for alignment), coordinate system transformation processing (e.g., uniformly adopting the world coordinate system), and data accuracy standardization processing (e.g., setting a unified accuracy standard to correct data with different accuracies).

The supplier middleware can efficiently perform data conversion, compatible with different data formats and protocols, thereby achieving seamless docking between heterogeneous systems and enhancing the interoperability of the system. Secondly, after data conversion, information can be transmitted to the autonomous driving domain controller in a standardized form, ensuring the accuracy and consistency of the data and reducing system failures caused by inconsistent data formats or transmission errors. In this way, the integrated perception unit can better acquire and process surrounding environment information of the vehicle, providing high-quality real-time data support for the auto drive system. Furthermore, the introduction of the supplier middleware optimizes the system architecture, making data flow management clearer, enhancing the stability and response speed of the entire auto drive system, and further improving the safety and reliability of autonomous driving.

In some embodiments, based on the business requirement of the automatic parking algorithm, at least one of the following data services is delineated: parking space information data service, positioning information data service, obstacle information data service, drivable space data service, planning request data service, planning status information data service, chassis information data service, and control data service.

Among them, parking space, positioning, obstacle, drivable space, planning request, and chassis data services are input-type data services. They primarily convert the parking space, positioning, obstacle, and drivable space data output by the supplier's perception assmebly with specific characteristics into general algorithm data types. The planning request data service is an important channel through which the supplier's application issues the parking instruction to the automatic parking planning and control algorithms. In the embodiments of the present disclosure, it has also been generalized. Chassis data is a crucial input model relied upon by the automatic parking algorithm. In the embodiments of the present disclosure, Chassis Controller Area Network (CAN) data is directly and transparently transmitted. The planning status data service and the control-type data service are output-type data services. They primarily feed back the planning and control status from the automatic parking planning and control algorithms to the supplier's application and issue instructions for lateral and longitudinal control of the chassis.

The data conversion service layer module also includes a second shared memory and SOA middleware. The SOA middleware encapsulates the Data Distribution Service (DDS) and the Scalable service-Oriented Middleware over IP (SOMEIP) service-oriented communication middleware, and the SOA middleware is directly integrated into the vendor middleware.

Illustratively, the SOA middleware of the data conversion service layer module encapsulates DDS and SOMEIP, facilitating efficient and flexible data flow and communication mechanisms. The second shared memory in this module serves as a medium for data storage and transfer, providing a fast and low-latency channel for data exchange between different modules. The shared memory greatly enhances the efficiency of data transmission and access, especially in applications with high real-time requirements, such as the auto drive system.

The automatic parking algorithm service layer module is configured to receive data information from the data conversion service layer module, and perform path planning and control for the automatic parking service based on this data information.

In an optional embodiment, the autonomous driving domain controller is connected to the integrated perception unit. The supplier middleware of the integrated perception unit communicates with the supplier middleware of the supplier module in the autonomous driving domain controller. The two complete data interaction through Ethernet (ETH) and Controller Area Network Flexible Data-rate (CANFD). The ETH utilizes blockchain technology to achieve decentralized, transparent, and tamper-proof data recording functions, building a blockchain-based decentralized application to support inter-vehicle communication, data sharing, and trust establishment. The CANFD, with its characteristics of high bandwidth, long data frames, short delay time, high real-time performance, and reliability, can provide efficient and reliable data transmission support for the auto drive system.

The Ethernet provides a high-bandwidth network connection that supports high-speed and stable data transmission, ensuring real-time exchange of a large amount of sensor data and effectively supporting the requirements of the auto drive system. Secondly, CANFD, as an efficient on-board communication protocol, features flexible data rates and strong anti-interference capabilities, making it applicable to high real-time and low-latency data exchange in the automotive field and ensuring tight coordination between controllers and perception systems. Through the dual cooperation of Ethernet and CANFD, the system not only maintains efficiency in high-speed data transmission but also adapts to various environmental requirements in different communication scenarios. This design optimizes the reliability and real-time performance of data transmission, helping to enhance the overall stability and response speed of the auto drive system, and providing safer and more accurate data support for autonomous driving. In an optional embodiment, for a supplier system based on DDS or SOMEIP with service-oriented communication middleware, a set of generic SOA middleware encapsulating DDS and SOMEIP is designed. Suppliers can adopt the SOA middleware solution by directly integrating the SOA middleware according to the embodiments of the present disclosure into their middleware modules, enabling direct interaction with data conversion services through the Ethernet communication protocol of DDS/SOMEIP. At the same time, suppliers can also establish a data communication channel using the first shared memory approach. The supplier module can achieve data interaction with the auto parking system by directly using this SOA middleware.

In an optional embodiment, a data exchange gateway service is created to facilitate data communication between the supplier module and the data conversion service layer. Data exchange is conducted through the first shared memory module within the supplier module and the second shared memory module within the data conversion service layer module. Both communicating parties exchange structured data streams containing data verification information and data sequence numbers via the first shared memory and the second shared content. The bidirectional data interaction is completed in a synchronous communication mode of request-response and according to the shared memory communication standard protocol.

The first shared memory of the supplier module and the second shared memory of the data conversion service layer module achieve bidirectional data interaction through synchronous communication mode of request-response. The synchronous communication mode ensures the real-time and consistency of data interaction, avoiding potential data loss or delay issues that may arise from asynchronous communication. Secondly, the bidirectional interaction mechanism enables effective data transfer between different modules, ensuring coordinated work among various parts of the system and enhancing the stability and reliability of the automatic parking planning and control algorithms. Furthermore, this architecture optimizes the communication efficiency between modules, reduces the complexity of the system, and improves resource utilization, resulting in a faster overall system response speed and providing more efficient services in automatic parking applications.

In addition, the structured data stream between the first shared memory and the second shared memory includes data verification information and data sequence numbers. This design effectively ensures the integrity and accuracy of transmitted data through data verification information. By comparing the verification information, any errors or losses that may occur during data transmission can be promptly detected and corrected, thereby improving the reliability of the system. Secondly, the introduction of data sequence numbers enables ordered data transmission, ensures the sequentiality of the data stream, avoids issues such as disorder or duplicate receipts, and facilitates precise synchronization of data processing between modules. Furthermore, the design of structured data stream improves the efficiency of data interaction, facilitates the management and scheduling of complex information, and further optimizes the performance of the system. These features work together to enhance the stability, reliability, and efficiency of the communication middleware for automatic parking planning and control algorithms.

The communication-middleware-implementation control method applicable to automatic parking planning and control algorithms is as follows.

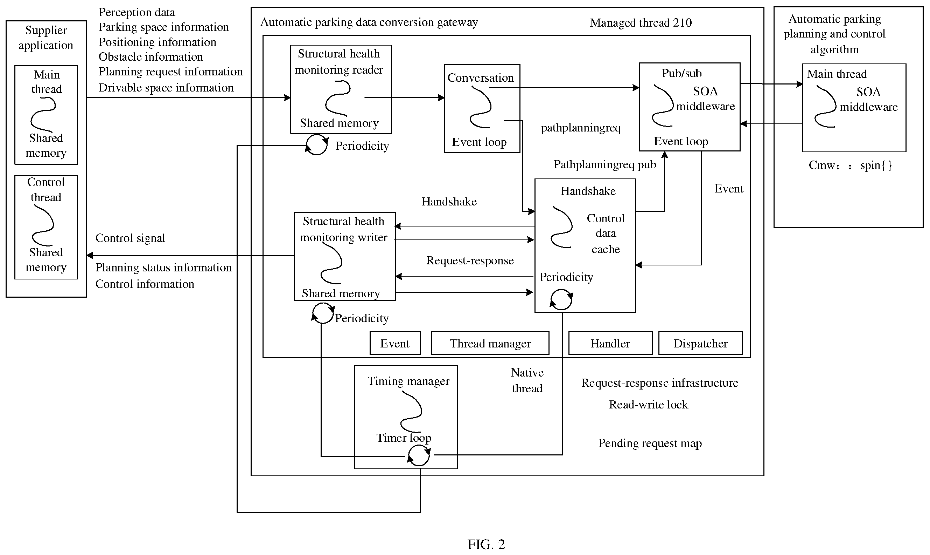

As illustrated in FIG. 2, the autonomous driving domain controller utilizes the std::future and std::promise features of the C++ standard library to construct the infrastructure of the request-response invocation mode, thereby ensuring that shared memory communication occurs in a synchronous manner and avoiding data confusion caused by concurrent communication. The data conversion service layer module employs a managed thread 210 design scheme, summarizing the eight SOA services within the data conversion service layer module. The common parts are implemented in the parent class using C++ polymorphism, while the business-specific changes are extended in the child class. In this way, all eight types of SOA data service handling logic are encapsulated into a specific event handling function (event dispatcher function), which is registered to the managed thread in a callback manner. The concept of events is used to package SOA service data. The data needs to be processed by each SOA service is stored in the data field of the event, added to the task queue of the thread pool through the thread manager, and then handed over to the handling thread for event handling.

The structured data management approach ensures centralized storage and efficient scheduling of data required by different SOA services, effectively avoiding data redundancy and invalid transmission, and enhancing the system's data processing efficiency. Secondly, the thread manager achieves multi-thread parallel handling by adding tasks to the queue of the thread pool, significantly improving the system's response speed and throughput, especially when handling a large amount of real-time data, which can significantly enhance the real-time performance and stability of the auto drive system. The handling thread ensures the sequential execution and efficient handling of tasks through event handling, avoiding potential race conditions and deadlock issues. Furthermore, the design based on the thread pool optimizes resource utilization, reduces system overhead and response latency, and further enhances the performance and reliability of the autonomous driving domain controller.

Using a managed thread design approach, std::thread is encapsulated, and an event loop is introduced based on C++ standard threads with the help of the managed thread. The event loop uses a condition variable (std::variable) to wait for events to arrive in a circular manner.

In some embodiments, the communication-middleware-implementation control method applicable to automatic parking planning and control algorithms is performed by a control device, such as at least one of various devices including a mobile phone device, a computer device, a tablet computer device, and a vehicle device. The control method is as follows:
controlling the integrated perception unit to receive and extract vehicle environment information acquired by a sensor;
controlling transmission of acquired vehicle surrounding information to the supplier module in the autonomous driving domain controller through the supplier middleware;
controlling the second shared memory of the data conversion service layer module to read path planning data information from the first shared memory in the supplier module;
controlling placement of an event into the event loop of the managed thread upon arrival of read event information, wherein the managed thread is configured to call the event handling function to process each received event individually;
controlling transmission of processed path planning data information to the SOA middleware, wherein the processed path planning data information is transmitted to the automatic parking algorithm service layer module through the SOA middleware; and
controlling the automatic parking algorithm layer module to generate control information and return control data information to the second shared memory of the data conversion service layer module, wherein the second shared memory is configured to transmit a control signal that needs to be executed by the vehicle to the first shared memory of the supplier module, so as to control the vehicle to complete parking.

In some embodiments, the autonomous driving domain controller designs a clock management module, and the data conversion service layer module periodically reads data from the first shared memory, which means it periodically initiates a request-response data communication mode; and
the architecture system includes: a chassis domain controller, which performs electronic power steering based on the autonomous driving behavior of the autonomous driving domain controller; an electronic stability program controller, which monitors the driving status of the vehicle; and a request-response mode is used to handle the handshake process between the autonomous driving domain controller and the chassis domain controller's electronic power steering and the handshake process between the autonomous driving domain controller and electronic stability program controller, and the generated data is transmitted to the SOA middleware. The request-response mode simplifies the interaction design between the handshake initiator and the handshake receiver in the handshake process, by using a method similar to function call return to feed back the handshake structure to the handshake initiator. At the same time, the request-response mode provides an exception handling process to deal with timeout issues during the handshake process, making the framework code easy to understand and maintain, while also maintaining friendliness towards modifications.

The clock management module provides a precise time reference for data exchange by ensuring the synchronization of system time, enabling stable data transmission and reception at predetermined intervals. Secondly, periodically initiating the request-response mode helps ensure stable and efficient communication between various modules of the system. In this mode, the data conversion service layer module periodically requests data from other services and waits for responses, ensuring the timeliness and reliability of data exchange and avoiding issues such as data loss or delay. Furthermore, the periodic communication mode facilitates continuous updates of real-time information for the system, ensuring that the auto drive system can respond promptly in a dynamically changing environment. Through this design, the system is better able to adapt to high real-time requirements, enhancing the response speed and decision-making accuracy of the autonomous driving domain controller in complex scenarios, and improving the safety and reliability of autonomous driving.

It should be noted that in request-response invocation, the transmitted data is supplemented with a Cyclic Redundancy Check (CRC) check unit and a transmission sequence number. The sender and receiver determine the validity of the transmitted data by comparing the CRC check and sequence number of the data. The read-write lock is set up. When a thread or process is writing to a shared resource, the read-write lock prevents other threads or processes from performing read or write operations, thus preventing data conflicts and inconsistencies. In an automatic parking control system, this ensures that when vehicle position or sensor data is updated, other system assemblies do not make decisions based on old data. Allowing a plurality of readers (such as threads or processes that only read data) to access shared resources simultaneously, while only one writer (such as a thread or process that needs to modify data) can access at any given time, provides higher concurrency, thereby improving the overall performance of the system.

Furthermore, the data conversion service periodically reads data from the first shared memory, which means it initiates the request-response data communication mode periodically. As can be seen from FIG. 2, there are also a plurality of periodic events in the system, such as the periodic data delivery service. Therefore, the embodiments of the present disclosure design a clock management module (Timer Manager) to encapsulate the timer event as a type of event and hand it over to the event system for unified processing. The clock management module maintains a clock event queue and traverses the queue at a 10ms interval. If a timer expires, a clock event is directly sent to the Thread Manager, where it is handled by the managed thread as a normal event. In the clock event handling program, a clock processing function that matches the attribute of the clock event is executed basd on the attribute of the clock event, such as performing periodic read or write operations.

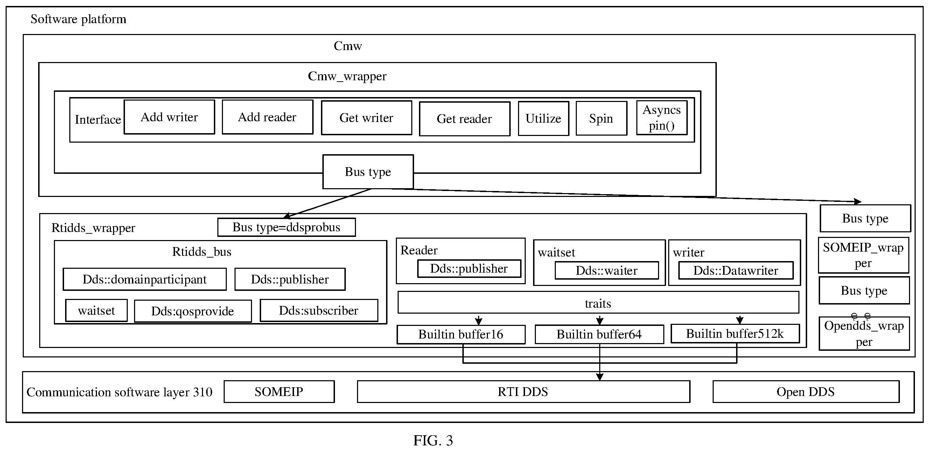

Furthermore, as illustrated in FIG. 3, DDS and SOMEIP are encapsulated within the SOA middleware (as illustrated in the communication software layer 310 in FIG. 3). The underlying communication protocol stack is secondarily encapsulated through function interfaces provided by the cmw_wrapper layer, such as AddReader(), AddWriter(), Spin(), and the like. This allows the autonomous parking algorithm to only perform data read and write operations on the cmw_wrapper layer. The cmw_wrapper layer freely switches the underlying DDS and SOMEIP implementations at complie time through a macro definition of BusType. Taking the encapsulation of RTI DDS as an example, the encapsulation of key data structures in RTI DDS, such as Reader, Writer, and WaitSet, is illustrated. The encapsulation behavior is implemented through traits, and the encapsulated data is stored in fixed buffers of different sizes. The basic logic of serializing and deserializing data types of data interfaces is achieved through type extraction technology.

The secondary encapsulation abstracts the communication protocol stack into a unified function interface, enabling seamless integration between upper-layer applications and different underlying protocols, reducing system coupling and enhancing flexibility. Secondly, by switching underlying protocols at compile time through the macro definition, developers can dynamically select DDS or SOMEIP based on actual needs without modifying upper-layer code, thus enhancing the system's configurability and scalability. Furthermore, DDS is applicable to distributed data transmission with high throughput and low latency, while SOMEIP provides an efficient service discovery and data exchange mechanism in vehicular environments. The flexible switching between the two enables the system to be optimized based on different application scenarios and requirements. Overall, adopting this encapsulation approach not only improves system performance but also enhances its maintainability and scalability, providing higher flexibility and efficiency for complex distributed systems.

Furthermore, in the initial state of system startup, the thread pool size is set to a default value of 5. After an event is generated, the Thread Manager will traverse each thread in the thread pool, looking for threads in the Idle state, and place the event into the event loop of the managed thread. If there is no thread in the Idle state in the thread pool, the Thread Manager will create a managed thread and place the event into the event loop of the newly created managed thread. To cope with possible request storms in the system, the upper limit of the number of thread pools is set to 16. When the number of thread pools reaches the upper limit, the number of threads will no longer increase. The Thread Manager will evaluate the length of the waiting queue in the event loop of each thread in the thread pool one by one, and place the event into the thread with the shortest waiting queue length. At the same time, the Thread Manager will monitor the status of each thread in the thread queue. When it is found that the number of idle threads (threads in the Idle state) reaches 20% or more of the total number of current threads, the current idle threads will be cleaned up, and 50% of the idle threads will be terminated to free up system resources.

Preferably, the data conversion logic is the core logic of the data conversion service. In the embodiments of the present disclosure, data type templates are parameterized using the C++ generic design concept, and static polymorphism of the compiler is implemented through the Curiously Recurring Template Pattern. This successfully encapsulates eight types of data conversion logic into independently loadable dynamic link libraries, enabling threads executing the data conversion service to dynamically load library files at runtime through dlopen, and directly call the entry function to execute the conversion logic through dlsym. This allows the system to perform plug-and-play maintenance and runtime dynamic upgrade of the data conversion logic in the form of dynamic libraries, fully realizing the convenience of software deployment and upgrade brought by SOA servitization.

Finally, it should be noted that the above embodiments are only used to illustrate the technical solutions of embodiments of the present disclosure and are not intended to limit them. Although detailed descriptions of embodiments of the present disclosure have been provided with reference to the above embodiments, those skilled in the art should understand that modifications or equivalent substitutions can still be made to the specific implementation methods of embodiments of the present disclosure. Any modifications or equivalent substitutions that do not deviate from the spirit and scope of embodiments of the present disclosure should be covered within the scope of protection of the claims of embodiments of the present disclosure.

## Claims

1. A communication-middleware-implementation architecture system applicable to automatic parking planning and control algorithms, the system comprising:
an integrated perception unit, configured to receive vehicle sensor data; and acquire surrounding environment information of a vehicle by comprehensively perceiving, based on the vehicle sensor data, surrounding environment of the vehicle; and
an autonomous driving domain controller, connected to the integrated perception unit, and configured to coordinate and manage an autonomous driving behavior of the vehicle based on the surrounding environment information of the vehicle;
wherein the autonomous driving domain controller comprises:
a supplier module, configured to provide the surrounding environment information of the vehicle to an upper-layer data conversion service layer module; wherein the supplier module is internally provided with supplier middleware and a first shared memory;
the data conversion service layer module, configured to acquire converted data information by performing data conversion and data unified processing on received surrounding environment information of the vehicle; and provide the converted data information to an upper-layer automatic parking algorithm service layer module;
wherein the data conversion service layer module comprises service-oriented architecture (SOA) middleware and a second shared memory, wherein the SOA middleware encapsulates a data distribution service (DDS) and scalable service-oriented communication middleware running on an Internet protocol (SOMEIP), and the SOA middleware is directly integrated into vendor middleware; and
the automatic parking algorithm service layer module, configured to receive data information from the data conversion service layer module, and perform path planning and control for an automatic parking service based on the data information.

2. The system according to claim 1, wherein the first shared memory in the supplier module and the second shared memory in the data conversion service layer module adopt a request-response synchronous communication mode to achieve bidirectional data interaction.

3. The system according to claim 1 or 2, wherein mutual transfer between the first shared memory and the second shared memory comprises a structured data stream containing data verification information and a data sequence number.

4. The system according to any one of claims 1 to 3, wherein the integrated perception unit is internally provided with supplier middleware, wherein the supplier middleware is configured to perform data conversion on received surrounding environment information of the vehicle and forward converted data information to the autonomous driving domain controller.

5. The system according to any one of claims 1 to 4, wherein supplier middleware in the integrated perception unit performs data interaction with the supplier middleware in the supplier module of the autonomous driving domain controller through Ethernet (ETH) and a controller area network flexible data rate (CANFD).

6. A communication-middleware-implementation control method applicable to automatic parking planning and control algorithms, performed by a control device, the method comprising:
controlling an integrated perception unit to receive and extract vehicle environment information acquired by a sensor;
controlling transmission of acquired vehicle surrounding information to a supplier module in an autonomous driving domain controller through supplier middleware;
controlling a second shared memory of a data conversion service layer module to read path planning data information from a first shared memory in the supplier module;
controlling placement of an event into an event loop of a managed thread upon arrival of read event information, wherein the managed thread is configured to call an event handling function to process each received event individually;
controlling transmission of processed path planning data information to SOA middleware, wherein the processed path planning data information is transmitted to an automatic parking algorithm service layer module through the SOA middleware; and
controlling the automatic parking algorithm layer module to generate control information and return control data information to the second shared memory of the data conversion service layer module, wherein the second shared memory is configured to transmit a control signal that needs to be executed by a vehicle to the first shared memory of the supplier module, so as to control the vehicle to complete parking.

7. The method according to claim 6, wherein a communication protocol stack of the SOA middleware is secondarily encapsulated into a function interface, and underlying DDS and SOMEIP implementations are freely switchable at compile time through a macro definition.

8. The method according to claim 6 or 7, wherein data needs to be processed by each SOA service in the data conversion service layer module of the autonomous driving domain controller is stored in a data field of an event, added to a task queue of a thread pool through a thread manager, and then handed over to a handling thread for event handling.

9. The method according to any one of claims 6 to 8, wherein the autonomous driving domain controller comprises a clock management module, and the data conversion service layer module periodically initiates a request-response data communication mode.

10. The method according to any one of claims 6 to 9, comprising:
using a request-response mode to handle a handshake procedure between the autonomous driving domain controller and a chassis domain controller's electronic power steering, and a handshake procedure between the autonomous driving domain controller and an electronic stability program controller, and transmitting generated data to the SOA middleware;
wherein the chassis domain controller is configured for electronic power steering based on an autonomous driving behavior of the autonomous driving domain controller; and
the electronic stability program controller is configured to monitor a driving status of the vehicle.
